# EUROPÄISCHE PATENTSCHRIFT

(11) **EP 2 319 283 B1**
(45) Veröffentlichungstag und Bekanntmachung des Hinweises auf die Patenterteilung: **30.03.2016**
(21) Anmeldenummer: 10014261.1
(22) Anmeldetag: 03.11.2010
(51) Int. Cl.: A01B 33/02, A01B 33/08

(54) **Gartengerät**
Garden device
Appareil de jardin

(30) Priorität: 04.11.2009 DE 202009014994 U
(43) Veröffentlichungstag der Anmeldung: 11.05.2011
(73) Patentinhaber: Viking GmbH, 6336 Langkampfen (AT)
(72) Erfinder: Fees, Heiner, 74321 Bietigheim-Bissingen (DE); Hohl, Ulrich, 74080 Heilbronn (DE); Eichhorn, Alexander, 75031 Eppingen (DE); Hager, Georg, 6322 Kirchbichl (AT); Redl, Markus, 6330 Kufstein (AT)
(74) Vertreter: Wasmuth, Rolf

(56) Entgegenhaltungen:
- FR-A1- 2 512 512
- US-A- 3 417 639
- US-A- 4 354 564

## Beschreibung

Die Erfindung betrifft ein Gartengerät mit den Merkmalen nach dem Oberbegriff des Anspruchs 1.

Bei der Bodenbearbeitung werden unter anderem sogenannte Motorhacken oder Fräsen eingesetzt, bei denen ein insbesondere als Verbrennungs- oder Elektromotor ausgeführter Antriebsmotor Werkzeuge beispielsweise in Form von Hacksternen drehend antreibt. Die Werkzeuge greifen im Betrieb in das zu bearbeitende Erdreich ein. Durch die Drehbewegung finden eine Auflockerung und ein Umgraben des Bodens statt.

Bei handgeführten Ausführungen der Gartengeräte ist deren Einsatz abhängig von der Qualität des Bodens und dessen übriger Beschaffenheit wie Hanglage oder dergleichen. Bei besonders schweren Böden ist eine hohe Antriebsleistung erforderlich, die einerseits der Auflockerung des Bodens und andererseits dem Vortrieb des Gartengerätes dient. Bei gegebener Motorleistung muss das Getriebe in seiner Untersetzung hierfür angepasst sein. Unter schwierigen Bedingungen kann auch der Einsatz eines Rückwärtsganges erforderlich werden. In vorbekannten Ausführungen sind hierzu Riementriebe vorgesehen, die in unterschiedlichen Anordnungen wahlweise zu- und abschaltbar sind. Hierdurch lässt sich das Werkzeug in unterschiedlichen Drehrichtungen antreiben. Außerdem kann die Drehbewegung des Werkzeuges auch bei laufendem Motor abgeschaltet werden. Derartige Ausführungen sind aber anfällig in der Betätigung der Kupplung zur Kraftübertragung mittels Riemen.

Aus der US 4,354,564 ist ein gattungsgemäßes Gartengerät bekannt, welches ein zweistufiges, schaltbares Planetengetriebe aufweisen kann. Beide Planetenstufen umfassen je ein Hohlrad, die wechselseitig mit Feststellelementen in Form von Reibbacken zur Wahl eines bestimmten Übersetzungsverhältnisses gegenüber dem Getriebegehäuse festgestellt oder freigegeben werden können. Bei hohen Betriebslasten wirken auf die Reibpaarung zwischen Reibbacken und Hohlrädern große Betriebskräfte. Um diese Betriebskräfte aufnehmen zu können, muss ein hoher Anpressdruck der Reibbacken vorgesehen sein, was eine Betätigung zur Gangwahl erschwert. Da sich außerdem der Reibkoeffizient abhängig von Temperatur, Verschleißzustand etc. verändern kann, besteht die Gefahr eines Durchrutschens.

Der Erfindung liegt die Aufgabe zugrunde, ein gattungsgemäßes Gartengerät derart weiterzubilden, dass eine verbesserte Handhabbarkeit bei verschiedenen Einsatzbedingungen erzielt ist.

Diese Aufgabe wird durch ein Gartengerät mit den Merkmalen des Anspruchs 1 gelöst.

Hierzu wird vorgeschlagen, dass das Getriebe ein mehrgängiges, schaltbares Planetengetriebe mit einem Getriebegehäuse und mit mindestens zwei Planetenstufen ist, wobei die Planetenstufen jeweils ein Hohlrad aufweisen, und wobei mindestens zwei Hohlrädern jeweils mindestens ein Feststellelement zum wahlweisen Freigeben und drehfesten Festlegen des jeweiligen Hohlrades gegenüber dem Getriebegehäuse zugeordnet ist.

Die Anordnung eines mehrgängigen, schaltbaren Planetengetriebes erweitert die Einsatzmöglichkeiten des Gartengerätes. Durch den systembedingt koaxialen Aufbau des Planetengetriebes kann dieses kleinvolumig ausgeführt werden, wobei es dennoch die hohen auftretenden Antriebsmomente übertragen kann. Durch die wahlweise zu- und abschaltbaren Planetenstufen können verschiedene Untersetzungsverhältnisse gewählt werden. Bevorzugt sind die Getriebestufen derart ausgelegt, dass ein Rückwärtsgang und mindestens ein, bevorzugt zwei unterschiedliche Vorwärtsgänge vorgesehen sind. Je nach Bodenbeschaffenheit oder Wahl eines anderen Werkzeuges kann das Gartengerät mit einem langsameren oder schnelleren Gang betrieben werden, wobei die konstruktiv vorgegebene Motorleistung bei Wahl eines kleinen Ganges auch für die Bearbeitung schwerer Böden ausreicht. Mittels des Rückwärtsganges lässt sich das Gartengerät auch aus schwierigen Bearbeitungsbereichen wieder herausfahren.

Außerdem ist ein formschlüssiger Eingriff des Feststellelementes in das zugeordnete Hohlrad vorgesehen. Bei der Bodenbearbeitung treten sehr hohe Betriebsmomente auf, die durch die Feststelleinrichtung zwischen den Hohlrädern und dem Getriebegehäuse aufgefangen werden müssen. Der formschlüssige Eingriff ist diesen Betriebsmomenten zuverlässig gewachsen.

Das Feststellelement ist als schwenkbarer, starrer Schwenkarm mit mindestens einem hervorstehenden Rastvorsprung ausgebildet, wobei am Umfang des zugeordneten Hohlrades mindestens eine, bevorzugt zwei Rastvertiefungen zur Aufnahme des Rastvorsprunges angeordnet sind. Insbesondere sind zwei sich gegenüberliegende Schwenkarme insbesondere unter Bildung einer Zange für je ein zugeordnetes Hohlrad vorgesehen. Die starre, schwenkbare Ausgestaltung der Schwenkarme ermöglicht ein präzise definiertes Festlegen bzw. Freigeben des jeweiligen Hohlrades, ohne dass undefinierte Zwischenzustände mit durchrutschendem Hohlrad befürchtet werden müssen. Der Eingriff der Rastvorsprünge in die Rastvertiefungen erzeugt eine zuverlässige Haltewirkung am äußersten Umfang des jeweiligen Hohlrades dort, wo bei gegebenem Betriebsdrehmoment unter Ausnutzung des maximalen verfügbare Radius die auftretenden Haltekräfte am geringsten sind. Die Anordnung ist verschleißarm und weist eine lange Lebensdauer auf. Durch die Anordnung mehrerer Rastvertiefungen, die über den Umfang des jeweiligen Hohlrades verteilt sind, kann das Hohlrad in nahezu jeder beliebigen Winkelstellung festgelegt werden. Beim Umschalten muss allenfalls eine nur geringe Drehbewegung in Kauf genommen werden, bevor die Rastvorsprünge in die jeweilige Rastvertiefung eingreifen können. Durch die insbesondere zangenartige Anordnung zweier Schwenkarme heben sich die wirkenden Haltekräfte insoweit gegenseitig auf, dass keine oder nur geringe resultierende Querkräfte auf das Hohlrad wirken. Die auftretenden Reaktionskräfte sind dementsprechend gering.

Das Hohlrad weist eine kreisförmige Umfangskontur und eine Leerlaufdrehrichtung auf, wobei die Rastvertiefung ausgehend von der Umfangskontur einen entgegen der Leerlaufdrehrichtung schräg nach innen verlaufenden Gleitabschnitt umfasst, der an einem in radialer Richtung sich erstreckenden Rastabsatz endet. Der schräg nach innen verlaufende Gleitabschnitt erleichtert die Betätigung des zugeordneten Schwenkarmes. Dieser kann bei nicht blockiertem, in Leerlaufrichtung sich drehendem Hohlrad angezogen werden, ohne dass eine exakte Überdeckung des Rastvorsprunges des Schwenkarmes mit der Rastvertiefung des Hohlrades abgewartet werden muss. Vielmehr gleitet der zugehörige Rastvorsprung auf dem Gleitabschnitt und wandert dabei gleichmäßig radial nach innen in seine Rastposition bzw. in die Rastvertiefung hinein, bis er an dem Rastabsatz zur Anlage kommt. Dort ist dann die Drehbewegung des Hohlrades in seiner Leerlaufdrehrichtung blockiert, wodurch der gewünschte Gang eingelegt ist.

In einer bevorzugten Ausführungsform ist eine Sperreinrichtung für den Schwenkarm vorgesehen, die bei betätigtem Schwenkarm einer Planetenstufe die Betätigung des Schwenkarmes einer anderen Planetenstufe sperrt. Hierdurch ist sichergestellt, dass immer nur ein einziges Hohlrad drehfest am Gehäuse gehalten werden kann, während die jeweils anderen Hohlräder ihre freie Drehbeweglichkeit beibehalten. Eine gegenseitige Blockierung durch versehentliche Sperrung zweier Hohlräder ist zuverlässig vermieden.

In bevorzugter Weiterbildung sind Trägerplatten zwischen den Schwenkarmen angeordnet, wobei die Sperreinrichtung Sperrkugeln sowie Sperröffnungen umfasst, wobei die Sperrkugeln axial verschiebbar in den Trägerplatten gehalten sind, und wobei die Sperröffnungen in den Schwenkarmen zur Aufnahme der Sperrkugeln vorgesehen sind. Es ist ein konstruktiv einfacher Aufbau geschaffen, der die gewünschte Sperrung selbsttätig herbeiführt. Durch Betätigung eines Schwenkarmes wird die in der benachbarten Trägerplatte geführte Sperrkugel axial verschoben und blockiert dadurch den benachbarten Schwenkarm. Eine eigenständige Betätigung der Sperreinrichtung ist nicht erforderlich.

In einer bevorzugten Ausführungsform sind die Schwenkarme um eine Schwenkachse gelenkig gelagert, wobei an einem ersten Ende der Schwenkarme jeweils eine Betätigungseinrichtung zur voneinander unabhängigen Verschwenkung der Schwenkarme angreift. Die Schwenklagerung der Schwenkarme führt zu einer kompakten, hochbelastbaren Bauform. Mittels der genannten Betätigungseinrichtung kann der Schwenkarm bzw. ein Paar von Schwenkarmen einer einzelnen Planetenstufe unabhängig von den jeweils anderen Schwenkarmen durch Verschwenkung betätigt werden, so dass die verschiedenen gewünschten Gänge durch Blockierung des jeweiligen Hohlrades eingelegt werden können.

In bevorzugter Weiterbildung liegt die Schwenkachse zwischen dem der Betätigungseinrichtung zugeordneten ersten Ende und einem weiteren Ende der Schwenkarme, wobei an dem weiteren Ende jeweils der Rastvorsprung angeordnet ist und wobei die Betätigungseinrichtung mindestens einen schwenkbaren Nocken zum Andrücken gegen die ersten Enden sowie Federelemente zum Rückstellen der durch die Nocken ausgelenkten Schwenkarme aufweist. Die Anordnung der Schwenkachse zwischen den beiden Enden der jeweiligen Schwenkarme führt zu günstigen Hebelverhältnissen mit geringen Betätigungskräften. Die Verschwenkung des Schwenkarmes in Blockierrichtung erfolgt mittels der Nocken, womit bei konstruktiv einfachem Aufbau hohe Betätigungs- und Haltekräfte erzielbar sind. In umgekehrter Richtung, also zum Lösen der Schwenkarme, sind derart hohe Kräfte nicht erforderlich, so dass das Lösen durch die genannten Federelemente herbeigeführt werden kann. Der Nockenantrieb kann dadurch einfach und kostengünstig ausgestaltet sein.

Die Betätigungseinrichtung weist vorteilhaft eine schwenkbare und axial verschiebbare Betätigungswelle mit dem mindestens einen Nocken auf, wobei verschiedene axiale Schaltpositionen der Betätigungswelle vorgesehen sind, in denen der mindestens eine Nocken wahlweise mit dem Schwenkarm bzw. den Schwenkarmen nur einer Planetenstufe im Eingriff steht. Mit nur einer einzigen Betätigungswelle lassen sich demnach die Schwenkarme mehrerer Planetenstufen betätigen, wodurch der konstruktive Aufbau vereinfacht ist. Gleichzeitig ist sichergestellt, dass die genannte Betätigungswelle in der gewählten axialen Schaltposition nur einen Schwenkarm bzw. ein Schwenkarmpaar einer einzigen Planetenstufe betätigt, ohne dabei auf die Schwenkarme weiterer Planetenstufen einzuwirken. Bedien- bzw. Schaltfehler sind dadurch vermieden.

In einer zweckmäßigen Ausführungsform ist auf der Abtriebsseite des Planetengetriebes ein Abtriebsstrang vorgesehen, wobei der Abtriebsstrang mit einer insbesondere rastenden Bremseinrichtung versehen ist. Der Abtriebsstrang ist beispielsweise durch das abtriebsseitige Hohlrad, einen vom abtriebsseitigen Hohlrad mitgenommenen Abtriebsträger, eine daran befestigte Ausgangswelle etc. gebildet. Zwar tritt bei insgesamt in ihrer Drehbewegung freigegebenen Hohlrädern und dadurch herbeigeführtem Leerlauf Selbsthemmung der einzelnen Getriebestufen ein. Die Viskosität der Schmierölfüllung, Reibung der einzelnen bewegten Baugruppen etc. führt jedoch dazu, dass der Abtriebsstrang bei laufendem Motor trotz Leerlauf zum ungewollten Mitdrehen neigt, was mit der erfindungsgemäßen Bremseinrichtung verhindert wird. Es hat sich gezeigt, dass das ungewollte Mitdrehen mit einem nur geringen Drehmoment erfolgt, so dass nur geringe Bremskräfte bzw. Bremsmomente erforderlich sind. Bevorzugt ist die Bremseinrichtung deshalb rastend insbesondere in Form einer Kugelrastung ausgeführt. Die damit erzielbaren Bremsmomente reichen aus, den Abtriebsstrang im Leerlauf zuverlässig stillzuhalten. Sobald aber ein Gang eingelegt wird, überwindet das entstehende Abtriebsmoment ohne Weiteres das rastende Bremsmoment, so dass auf eine eigenständige Betätigung der Bremseinrichtung verzichtet werden kann. Die Anordnung erfüllt damit einerseits die einschlägigen Sicherheitsnormen und ist andererseits komfortabel in der Handhabung.

Ausführungsbeispiele der Erfindung sind nachfolgend anhand der Zeichnung näher beschrieben. Es zeigen:
- Fig. 1: in einer perspektivischen Ansicht eine erfindungsgemäß ausgeführte Motorhacke mit einem mehrgängigen, schaltbaren Planetengetriebe;
- Fig. 2: eine schematische Blockdarstellung des Planetengetriebes nach Fig. 1 mit Einzelheiten zu seinen verschiedenen Planetenstufen;
- Fig. 3: eine perspektivische Ansicht des Getriebegehäuses nach Fig. 1 zur Aufnahme eines Planetengetriebes nach Fig. 2 mit Einzelheiten zur Betätigungseinrichtung für die verschiedenen Gänge;
- Fig. 4: das geöffnete Getriebegehäuse nach Fig. 3 mit Einzelheiten zur Anordnung der Hohlräder, Schwenkarme und Betätigungseinrichtung;
- Fig. 5: eine Querschnittsdarstellung des Planetengetriebes durch die zweite, für einen schnellen Vorwärtsgang vorgesehene Planetenstufe im ausgekuppelten Zustand;
- Fig. 6: die Anordnung nach Fig. 5 im eingekuppelten Zustand des Hohlrades;
- Fig. 7: eine Querschnittsdarstellung des Planetengetriebes durch die dritte, für einen langsamen Vorwärtsgang vorgesehene Planetenstufe im eingekuppelten Zustand;
- Fig. 8: eine Querschnittsdarstellung des Planetengetriebes durch die erste, für einen Rückwärtsgang vorgesehene Planetenstufe im eingekuppelten Zustand.

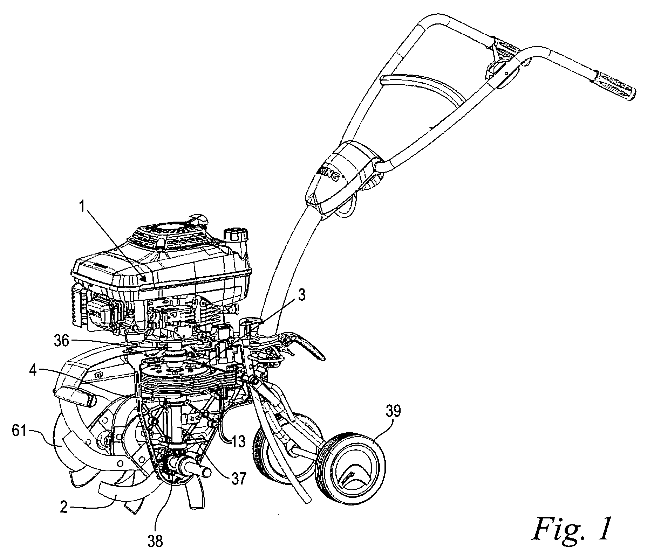

Fig. 1 zeigt in einer perspektivischen Darstellung ein erfindungsgemäß ausgeführtes Gartengerät am Beispiel einer Motorhacke, die für die handgeführte Bodenbearbeitung vorgesehen ist. Es kann auch eine Bodenfräse oder ein anderes Gartengerät zur Bodenbearbeitung vorgesehen sein. Die Motorhacke weist hierzu einen Antriebsmotor 1 auf, der im gezeigten Ausführungsbeispiel ein Verbrennungsmotor ist. Es kann aber auch ein Elektromotor für den Netzspannungs- oder Akku-Betrieb vorgesehen sein. Der Antriebsmotor 1 treibt im Betrieb mindestens ein Werkzeug 2 für die Bodenbearbeitung an.

Die Motorhacke kann von Hand über zwei nicht angetriebene Laufräder 39 an den Arbeitsort verfahren werden, vor denen drehend vom Antriebsmotor 1 antreibbare, hier als Hacksterne ausgeführte Werkzeuge 2 angeordnet sind. Koaxial zu den Werkzeugen 2 sind noch optionale Schutzscheiben 61 angeordnet. Zwischen dem Antriebsmotor 1 und den Werkzeugen 2 ist ein hier geöffnet dargestelltes Getriebe angeordnet, wobei der besseren Übersichtlichkeit halber nur eine Hälfte der Werkzeuge 2 mit nur einer Schutzscheibe 61 dargestellt ist. Das Getriebe ist nach der Erfindung ein mehrgängiges, schaltbares Planetengetriebe 3 mit einem Getriebegehäuse 4. Das Planetengetriebe 3 ist über eine Eingangswelle 36 mit dem Antriebsmotor 1 verbunden. Auf der Abtriebsseite des Planetengetriebes 3 ist eine Ausgangswelle 37 angeordnet, die über ein zwischengeschaltetes Winkelgetriebe 38 das oder die Werkzeuge 2 bei Bedarf drehend antreibt. Im Betrieb greifen die drehenden Werkzeuge 2 in den zu bearbeitenden Boden ein, wobei dieser aufgelockert und umgegraben wird. Durch die Drehbewegung wird die Motorhacke je nach Drehrichtung der Werkzeuge 2 auch einer Vorwärts- bzw. Rückwärtsbewegung unterzogen. Hierbei werden die Laufräder in nicht dargestellter Weise manuell hochgeschwenkt, um bei der Bodenbearbeitung nicht zu stören.

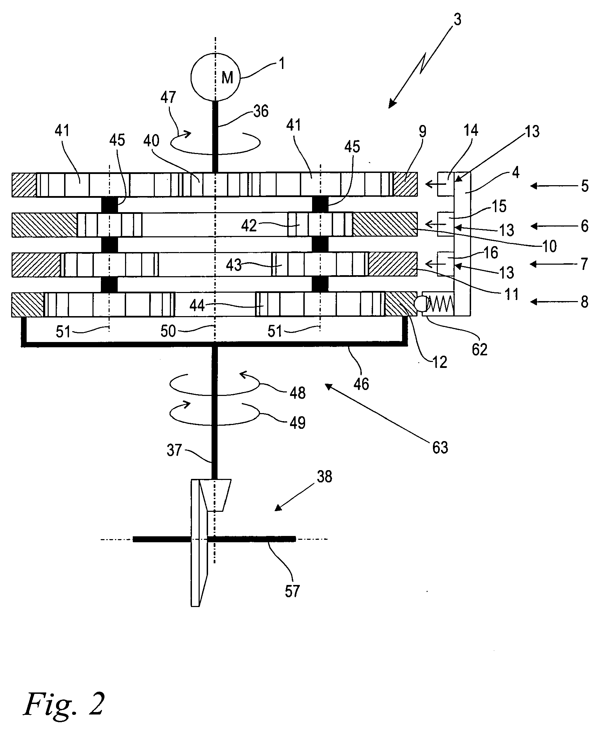

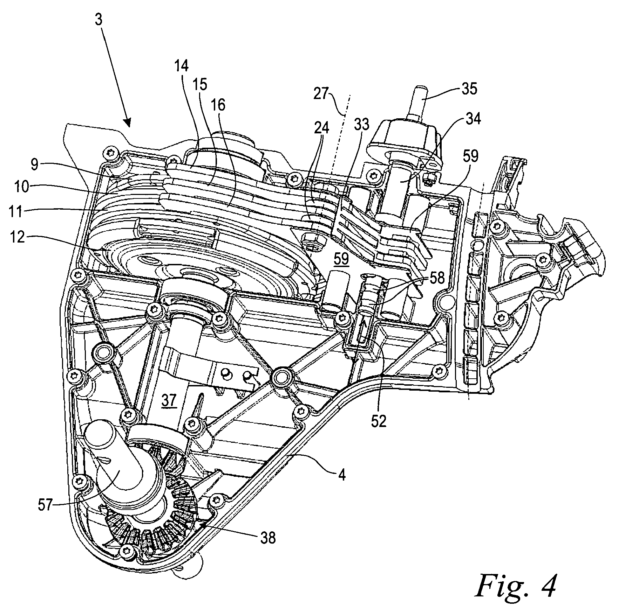

Das Planetengetriebe 3 ist mehrgängig mit im gezeigten Ausführungsbeispiel insgesamt vier Planetenstufen 5, 6, 7, 8, die ebenso wie die zugehörigen Hohlräder 9, 10, 11, 12 in Fig. 2 dargestellt sind. Drei Hohlrädern 9, 10, 11 ist je ein Feststellelement 13 zum wahlweisen Freigeben und drehfesten Festlegen des jeweiligen Hohlrades 9, 10, 11 (Fig. 2) am Getriebegehäuse 4 zugeordnet. Die Feststellelemente 13 sind im gezeigten Ausführungsbeispiel als Schwenkarme 14, 15, 16 (Fig. 4) ausgeführt. Sie können aber auch als nicht dargestellte Bremsbänder ausgestaltet sein, die die Hohlräder 9, 10, 11 umschlingen. Durch nicht näher dargestellte Betätigungseinrichtungen können die Bremsbänder angezogen werden, wobei das jeweilige Hohlrad 9, 10, 11 (Fig. 2) in seiner Drehbewegung relativ zum Getriebegehäuse 4 blockiert wird. Umgekehrt wird durch nachlassenden Zug auf das jeweilige Bremsband die relative Drehbeweglichkeit des Hohlrades 9, 10, 11 (Fig. 2) gegenüber dem Getriebegehäuse 4 freigegeben. Hierdurch können verschiedene Vorwärtsgänge mit verschiedenen Untersetzungsverhältnissen sowie auch ein Rückwärtsgang gewählt werden, wie dies weiter unten im Zusammenhang mit Fig. 2 näher beschrieben ist. Anstelle von Bremsbändern können auch andere Mittel für ein kraftschlüssiges Festlegen der Hohlräder 9, 10, 11 gegenüber dem Getriebegehäuse 4 zweckmäßig sein.

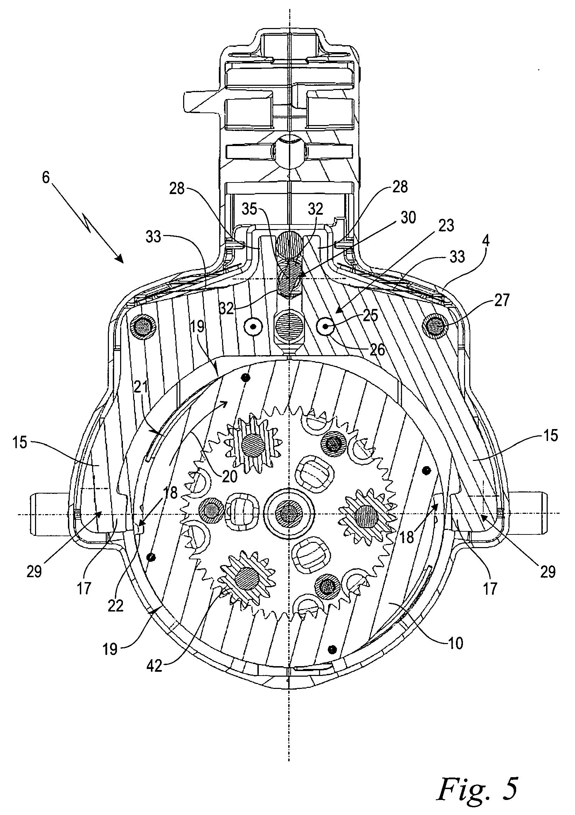

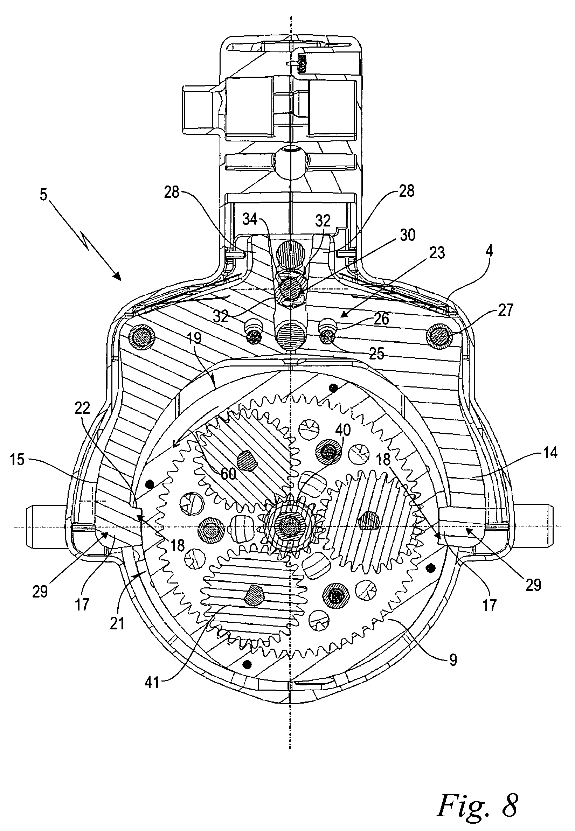

Fig. 2 zeigt in schematischer Blockdarstellung eine erfindungsgemäße Variante des Antriebsstrangs nach Fig. 1. Demnach weist das Planetengetriebe 3 insgesamt vier Planetenstufen 5, 6, 7, 8 auf. Alle Planetenstufen 5, 6, 7, 8 sind koaxial zur Eingangswelle 36 und zur Ausgangswelle 37 entlang einer Mittelachse 50 angeordnet. Den Planetenstufen 5, 6, 7, 8 ist jeweils ein zur Eingangswelle 36 und zur Ausgangswelle 37 konzentrisch angeordnetes Hohlrad 9, 10, 11, 12 zugeordnet. Jede Planetenstufe 5, 6, 7, 8 weist je einen Satz Planetenräder 41, 42, 43, 44 auf, von denen hier der besseren Übersichtlichkeit halber nur jeweils zwei Planetenräder 41, 42, 43, 44 jeder Planetenstufe 5, 6, 7, 8 dargestellt sind. Tatsächlich weist aber jede Planetenstufe 5, 6, 7, 8 jeweils drei gleichmäßig um die Mittelachse 50 herum verteilt angeordnete Planetenräder 41,42,43,44 auf, wie dies in den Fig. 5 bis 8 dargestellt ist. Es kann aber auch zweckmäßig sein, für jede Planetenstufe 5, 6, 7, 8 jeweils nur ein, zwei oder mehrere Planetenräder 41, 42, 43, 44 vorzusehen. Darüber hinaus ist nur die erste, eingangsseitige Planetenstufe 5 mit einem mittigen Sonnenrad 40 versehen, wie dies auch in Fig. 8 zu erkennen ist.

Achsparallel zur Mittelachse 50 sind Planetenwellen 45 angeordnet, an denen jeweils ein Planetenrad 41, 42, 43, 44 jeder Planetenstufe 5, 6, 7, 8 befestigt ist. Jede Planetenwelle 45 trägt je eines der Planetenräder 41, 42, 43, 44, die mittels der jeweiligen Planetenwelle 45 drehfest miteinander verbunden sind, sich also im Betrieb mit gleicher Drehzahl drehen.

Der Antriebsmotor 1 treibt über die Eingangswelle 36 das Sonnenrad 40 der ersten Getriebestufe 5 an. Im Leerlauf greifen die Feststellelemente 13 nicht an den Hohlrädern 9, 10, 11 an, so dass sich diese frei gegenüber dem Getriebegehäuse 4 drehen können. Für das Hohlrad 12 der vierten, ausgangsseitigen Planetenstufe 8 ist kein Feststellelement 13 vorgesehen, so dass auch dieses sich nahezu frei gegenüber dem Getriebegehäuse 4 drehen kann. Die vierte, ausgangsseitige Planetenstufe 8 ist Teil einer Abtriebsstufe 63, die unter anderem das zugehörige Hohlrad 12, einen Abtriebsträger 46, die Ausgangswelle 37 und eine Werkzeugwelle 57 umfasst. Der schematisch dargestellte Abtriebsträger 46 ist drehfest mit dem Hohlrad 12 verbunden. Eine Drehbewegung des ausgangsseitigen Hohlrades 12 wird mittels des Abtriebsträgers 46 auf die Ausgangswelle 37 und von dort mittels des Winkelgetriebes 38 über die ausgangsseitige Werkzeugwelle 57 auf die Werkzeuge 2 (Fig. 1) übertragen. Der Abtriebsstrang 63 ist mit einer weiter unten näher beschriebenen Bremseinrichtung 62 versehen.

Bei laufendem Antriebsmotor 1 und drehender Eingangswelle 36 wird der zugeordnete Satz von Planetenrädern 41 mittels des Sonnenrades 40 in Drehbewegung gesetzt. Die Planetenräder 41 der ersten Planetenstufe 5 rollen dabei auf der Innenseite des Hohlrades 9 ab, so dass der ganze Satz von Planetenrädern 41 eine Umlaufbewegung um die Mittelachse 50 ausführt. Da die Planetenräder 42,43,44 der nachfolgenden Planetenstufen 6, 7, 8 über die Planetenwellen 45 mit den jeweiligen Planetenrädern 41 der ersten Planetenstufe 5 verbunden sind, ist ihre Umlaufgeschwindigkeit um die Mittelachse 50 gleich. Da darüber hinaus die Planetenräder 42, 43, 44 der nachfolgenden Planetenstufen 6, 7, 8 durch ihre drehfeste Verbindung mit den Planetenwellen 45 die gleiche Drehzahl wie die Planetenräder 41 der ersten Planetenstufe 5, aber unterschiedliche Zähnezahlen bzw. Durchmesser aufweisen, tritt im Leerlauf, also bei nicht angezogenen Feststellelementen 13, Selbsthemmung ein. Diese Selbsthemmung äußert sich derart, dass die Hohlräder 9, 10, 11 jeweils eine Umlaufbewegung um die Mittelachse 50 mit unterschiedlicher Drehzahl und Drehrichtung ausüben. Das ausgangsseitige Hohlrad 12 steht still, so dass sich der Abtriebsstrang 63 und damit die Werkzeuge 2 (Fig. 1) trotz drehend angetriebener Eingangswelle 36 nicht drehen.

Allerdings war in der Praxis zu beobachten, dass die Viskosität der Schmierölfüllung, Reibung der einzelnen bewegten Baugruppen etc. dazu führt, dass der Abtriebsstrang 63 bei laufendem Antriebsmotor 1 trotz Leerlauf zum ungewollten Mitdrehen neigt. Um dies zu verhindern, ist der Abtriebsstrang 63 mit einer hier bevorzugt rastend ausgeführten Bremseinrichtung 62 versehen. Die Bremseinrichtung 62 kann an geeigneter Stelle des Abtriebsstranges 62, also beispielsweise am Abtriebsträger 46, an der Ausgangswelle 37 oder an der Werkzeugwelle 57 angreifen und ein ungewolltes Mitdrehen der Werkzeuge 2 (Fig. 1) verhindern. Im gezeigten Ausführungsbeispiel greift die Bremseinrichtung 62 am ausgangsseitigen Hohlrad 12 der ausgangsseitigen Planetenstufe 8 an. Die Bremseinrichtung 62 kann aktiv steuerbar ausgestaltet sein, ist aber hier rastend in Form einer Kugelrastung ausgebildet, wobei eine federvorgespannte Kugel radial von außen gegen das Hohlrad 12 gedrückt wird und dort in eine Rastvertiefung eingreift. Es entsteht ein kombinierter Form- und Kraftschluss zwischen dem Hohlrad 12 bzw. dem gesamten Abtriebsstrang 63 und dem Getriebegehäuse 4 bzw. dem Gartengerät insgesamt, der ein ungewolltes Mitdrehen des Abtriebsstranges 63 im Leerlauf und bei laufendem Antriebsmotor 1 verhindert. Die rastende Haltekraft ist aber derart gering bemessen, dass sich der Abtriebsstrang 63 bei eingelegtem Gang unter Überwindung der rastenden Haltekraft frei drehen kann.

Ausgehend von der gezeigten Leerlaufposition hat der Nutzer die Möglichkeit, einen Rückwärtsgang oder einen von zwei unterschiedlichen Vorwärtsgängen zu wählen. Hierzu wird über eine weiter unten näher beschriebene Betätigungseinrichtung eines der Feststellelemente 13 für die ausgewählte Planetenstufe 5, 6, 7 betätigt. Die Feststellelemente 13 sind hier als Schwenkarme 14, 15, 16 ausgeführt, die in Fig. 2 nur schematisch dargestellt und im Zusammenhang mit den Fig. 4 bis 8 näher beschrieben sind. Die Schwenkarme 14, 15, 16 können entsprechend in Fig. 2 dargestellten Pfeilen radial von außen gegen die Hohlräder 9, 10, 11 verfahren werden, wodurch wahlweise eines der Hohlräder 9, 10, 11 gegenüber dem Getriebegehäuse 4 drehfest festgelegt, also in seiner Drehbewegung um die Mittelachse 50 blockiert wird.

Bei schweren Böden bzw. bei langsamen Bearbeitungsgeschwindigkeiten kann eine Gangstufe mit hohem Untersetzungsverhältnis gewählt werden, wozu die in Kraftübertragungsrichtung dritte Planetenstufe 7 vorgesehen ist. Durchmesser bzw. Zähnezahl der zugeordneten Planetenräder 43 sind geringfügig kleiner als Durchmesser bzw. Zähnezahl der abtriebsseitigen Planetenräder 44 der vierten Planetenstufe 8. Bei mittels des Schwenkarmes 16 in seiner Drehbewegung blockiertem Hohlrad 11 und entsprechend dem Pfeil 47 drehend angetriebenem Sonnenrad 40 führen die gleiche Umlaufgeschwindigkeit und die gleiche Drehzahl der Planetenräder 43, 44 dazu, dass sich das Hohlrad 12 der abtriebsseitigen Planetenstufe 8 mit geringer Drehzahl entgegen der durch den Pfeil 47 angegebenen Eingangsdrehrichtung entsprechend einem Pfeil 48 um die Mittelachse 50 dreht. Die gleiche Drehbewegung wird durch den an das Hohlrad 12 angeschlossenen Abtriebsträger 46 und die Ausgangswelle 37 ausgeführt und mittels des Winkelgetriebes 38 bzw. der Werkzeugwelle 57 in Form einer langsamen Drehbewegung auf die Werkzeuge 2 (Fig. 1) derart übertragen, dass die Motorhacke eine langsame, kraftvolle Vorwärtsbewegung mit hohem Drehmoment ausführt.

Für leichtere Böden bzw. schnellere Bearbeitungsgeschwindigkeiten kann das Hohlrad 11 der dritten Planetenstufe 7 freigegeben und statt dessen das Hohlrad 10 der in Kraftübertragungsrichtung zweiten Planetenstufe 6 mittels der zugeordneten Schwenkarme 15 festgelegt werden. Durchmesser bzw. Zähnezahl der zugeordneten Planetenräder 42 sind kleiner als diejenigen der Planetenräder 43 der dritten Planetenstufe 7 und außerdem kleiner als diejenigen der vierten, abtriebsseitigen Planetenstufe 8. Bei ansonsten gleicher Funktion wird die Drehgeschwindigkeit des abtriebsseitigen Hohlrades 12 bzw. des gesamten Abtriebsstranges 63 im Vergleich zur betätigten dritten Planetenstufe 7 erhöht. Bearbeitungs- und Vorwärtsgeschwindigkeit sind bei verringertem Abtriebsdrehmoment gesteigert, wodurch ein zweiter, schnellerer Vorwärtsgang gebildet ist.

Für bestimmte Bearbeitungsaufgaben kann ein Rückwärtsgang erforderlich sein, wozu die in Kraftübertragungsrichtung erste Planetenstufe 5 vorgesehen ist. Durchmesser bzw. Zähnezahl der zugeordneten Planetenräder 41 sind größer als diejenigen der Planetenräder 44 der abtriebsseitigen Planetenstufe 8. Bei mittels des Schwenkarmes 14 in seiner Drehbewegung blockiertem Hohlrad 9 dreht sich das ausgangsseitige Hohlrad 12 der abtriebsseitigen Planetenstufe 8 samt dem nachgeschalteten Abtriebsstrang entgegen der für die Vorwärtsgänge beschriebenen Drehrichtung, wie dies durch einen Pfeil 49 angegeben ist, also in gleicher Drehrichtung wie die der Eingangswelle 36 bzw. des Sonnenrades 40. Die Drehbewegung entsprechend dem Pfeil 49 wird mittels des Winkelgetriebes 38 in eine Rückwärtsdrehbewegung der Werkzeuge 2 (Fig. 1) umgesetzt, wodurch ein Rückwärtsgang gebildet ist. Durchmesser bzw. Zähnezahldifferenz zwischen den eingangsseitigen Planetenrädern 41 und den ausgangsseitigen Planetenrädern 44 sind ähnlich wie bei der dritten Planetenstufe 7 gewählt, so dass die Rückwärtsbewegung kraftvoll, aber langsam ist.

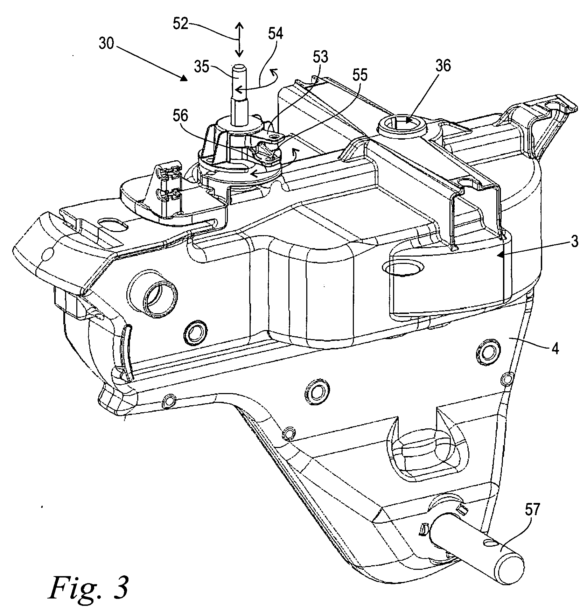

Eine konkrete Ausgestaltung der schematisch in Fig. 2 dargestellten Getriebeanordnung ist nachfolgend im Zusammenhang mit den Fig. 3 bis 8 näher beschrieben. Fig. 3 zeigt in perspektivischer Ansicht ein Getriebegehäuse 4 der Motorhacke nach Fig. 1 zur Aufnahme des Planetengetriebes 3 nach Fig. 2. Auf der Oberseite des Getriebegehäuses 4 ist eine Öffnung zur Hindurchführung der Eingangswelle 36 vorgesehen. Auf der gegenüberliegenden Unterseite ist die Werkzeugwelle 57 durch das Getriebegehäuse 4 hindurchgeführt. Auf der Oberseite ist benachbart zur Eingangswelle 36 eine Betätigungseinrichtung 30 für die Schwenkarme 14, 15, 16 (Fig. 4 bis 8) angeordnet. Die Betätigungseinrichtung 30 umfasst eine hier nicht erkennbare, in Fig. 4 dargestellte Betätigungswelle 34 sowie eine koaxial dazu angeordnete Betätigungswelle 35. Die Betätigungswelle 35 kann mittels eines Hebels 53 entsprechend einem Doppelpfeil 54 um seine Längsachse verschwenkt und entsprechend einem Doppelpfeil 52 in axialer Richtung verschoben werden. Diese Bewegung kann über ein Schaltgestänge oder über Seilzüge erfolgen. Die weitere Betätigungswelle 34 (Fig. 4) ist nicht axial verschiebbar, kann aber mittels eines zugeordneten Hebels 55 entsprechend einem Doppelpfeil 56 um seine Längsachse koaxial zur Betätigungswelle 35 verschwenkt werden.

Fig. 4 zeigt die Anordnung nach Fig. 3 innerhalb des Getriebegehäuses 4. Das Getriebegehäuse 4 ist durch zwei Halbschalen aufgebaut, von denen eine hier abgenommen ist. Das Getriebegehäuse 4 nimmt das Planetengetriebe 3 auf, von dem hier die vier zugeordneten Hohlräder 9, 10, 11, 12 zu erkennen sind. Darüber hinaus ist im Getriebegehäuse 4 die Abtriebswelle 37 sowie das 90°-Winkelgetriebe 38 mit der Werkzeugwelle 57 gelagert.

Radial außenseitig der Hohlräder 9, 10, 11 sind Schwenkarme 14, 15, 16 angeordnet, die als Paket übereinander unter Zwischenlage von Trägerplatten 24 gestapelt und an einer gemeinsamen Schwenkachse 27 schwenkbar gelagert sind. Das genannte Paket ist zwischen zwei Deckblechen 59 gehalten. Zur voneinander unabhängigen Betätigung der Schwenkarme 14, 15, 16 sind die beiden Betätigungswellen 34, 35 vorgesehen. Die Betätigungswelle 34 ist als Hohlwelle ausgeführt, innerhalb derer die Betätigungswelle 35 koaxial schwenkbar und entsprechend dem Doppelpfeil 52 axial verschiebbar gelagert ist. Die innere, massiv ausgeführte Betätigungswelle 35 weist an ihrem unteren, innerhalb des Getriebegehäuses 4 liegenden Ende zwei Rastnuten 58 auf, in die eine gehäusefeste, nicht dargestellte Rastkugel eingreift. Hierdurch kann die Betätigungswelle 35 zwei verschiedene, alternativ den Schwenkarmen 15, 16 zugeordnete axiale Rastpositionen in der durch den Doppelpfeil 52 angegebenen axialen Verstellrichtung einnehmen.

Mittels der Betätigungswellen 34, 35 können die Schwenkarme 14, 15, 16 einzeln und unabhängig voneinander radial von außen gegen die Hohlräder 9, 10, 11 zu deren Blockierung durch eine Schwenkbewegung um die Schwenkachse 27 angedrückt werden.

Für eine entgegengesetzte Rückstellbewegung sind Federelemente 33 vorgesehen, die im gezeigten Ausführungsbeispiel als einteiliges Federblech mit drei auf die Schwenkarme 14, 15, 16 einwirkenden Federzungen ausgebildet sind. Die Federelemente 33 können aber auch als Zug- oder Druckfedern in Form von Schenkel- oder Schraubenfedern oder in anderer geeigneter Form ausgeführt sein. Die Federzungen greifen zwischen die Trägerplatten 24 und Deckbleche 59 und drücken dabei unter Vorspannung gegen die Schwenkarme 14, 15, 16.

Fig. 5 zeigt eine Querschnittsdarstellung des Planetengetriebes 3 (Fig. 4) durch die zweite, für den schnellen Vorwärtsgang vorgesehene Planetenstufe 6. Es ist zu erkennen, dass drei gleichmäßig über den Umfang verteilte Planetenräder 42 mit ihrer Verzahnung innenseitig in die Verzahnung des Hohlrades 10 eingreifen. Bei in seiner Drehbewegung freigegebenem Hohlrad 10 führt dieses eine Drehbewegung in einer Leerlaufdrehrichtung 20 aus. Um den vorstehend beschriebenen schnellen, gering untersetzten Vorwärtsgang einzulegen, kann diese Drehbewegung relativ zum Getriebegehäuse 4 mittels eines Feststellelementes 13 (Fig. 2) blockiert werden. Dieses ist nach der Erfindung als um die Schwenkachse 27 schwenkbarer, starrer Schwenkarm 15 ausgebildet, der zum formschlüssigen Eingriff in das zugeordnete Hohlrad 10 vorgesehen ist. Hierzu kann es ausreichen, dass für die Planetenstufe 6 bzw. das Hohlrad 10 nur ein Schwenkarm 15 vorgesehen ist. Im gezeigten Ausführungsbeispiel sind zwei symmetrisch sich gegenüberliegende, eine Zange bildende Schwenkarme 15 für das zugeordnete Hohlrad 10 angeordnet. Zur bedarfsweisen Bildung des vorgenannten Formschlusses zwischen den Schwenkarmen 15 und dem Hohlrad 10 weisen die Schwenkarme 15 radial nach innen hervorstehende Rastvorsprünge 17 auf, während das Hohlrad 10 auf seinem Umfang mit Rastvertiefungen 18 zur Aufnahme der Rastvorsprünge 17 versehen ist. Es sind hier beispielhaft zwei Rastvertiefungen 18, also je eine Rastvertiefung 18 für je einen Rastvorsprung 17 der Schwenkarme 15 vorgesehen. Es kann aber auch eine höhere Anzahl von Rastvertiefungen 18 und/oder Rastvorsprüngen 17 zweckmäßig sein.

Das Hohlrad weist eine kreisförmige Umfangskontur 19 auf, von der ausgehend die Rastvertiefungen 18 radial nach innen eingeformt sind. Die Rastvertiefungen 18 können in Umfangsrichtung symmetrisch ausgeführt bzw. in ihrer Form derjenigen der Rastvorsprünge 17 angepasst sein. Bevorzugt umfassen die Rastvertiefungen 18 einen Gleitabschnitt 21, der ausgehend von der Umfangskontur 19 entgegen der Leerlaufdrehrichtung 20 schräg radial nach innen verläuft. Außerdem umfassen die Rastvertiefungen je einen in der radialen Richtung sich erstreckenden Rastabsatz 22, der den jeweiligen Gleitabschnitt 21 entgegen der Leerlaufdrehrichtung 20 begrenzt.

Die beiden Schwenkarme 15 weisen jeweils ein erstes Ende 28 und ein zweites Ende 29 auf, wobei die jeweilige Schwenkachse 27 zwischen den beiden Enden 28, 29 angeordnet ist. An den beiden ersten Enden 28 greift die Betätigungseinrichtung 30 an, während die Schwenkarme 15 an ihren zweiten Enden 29 mit den radial nach innen hervorstehenden Rastvorsprüngen 17 versehen sind. Die Rastvorsprünge 17 sind zum formschlüssigen Eingriff in die Rastvertiefungen 18 vorgesehen. In der Ruhelage nach Fig. 5 greifen die Rastvorsprünge 17 jedoch nicht in die Rastvertiefungen 18 ein, so dass die Drehbewegung des Hohlrades 10 in der Leerlaufdrehrichtung 20 freigegeben ist.

Die Betätigungseinrichtung 30 für die Schwenkarme 15 umfasst die in den Fig. 3 und 4 dargestellte Betätigungswelle 35, die in Überdeckung mit den ersten Enden 28 der Schwenkarme 15 mit mindestens einem, hier zwei radial nach außen hervorstehenden Nocken 32 versehen ist. Außerdem ist in Fig. 5 zu erkennen, dass die Federzungen der Federelemente 33 unter Vorspannung zwischen den ersten Enden 28 und den Schwenkachsen 27 derart an den Schwenkarmen 15 anliegen, dass die Schwenkarme 15 um die jeweiligen Schwenkachsen 27 schwenkend mit ihren ersten Enden 28 unter Vorspannung gegen die Nocken 32 gedrückt werden. In der Drehwinkelstellung der Betätigungswelle 35 nach Fig. 5 führt dies dazu, dass die Schwenkarme 15 mit ihren zweiten Enden 29 und den daran angeordneten Rastvorsprüngen 17 aus den Rastvertiefungen 18 heraus geschwenkt sind, wobei die Rastvorsprünge 17 außerhalb der Umfangskontur 19 des Hohlrades 10 liegen.

Darüber hinaus ist eine Sperreinrichtung 23 für die in den Fig. 4 bis 8 dargestellten Schwenkarme 14, 15, 16 vorgesehen, die bei betätigtem Schwenkarm 14, 15, 16 jeweils einer einzelnen Planetenstufe 5, 6, 7 die Betätigung der Schwenkarme 14, 15, 16 der jeweils übrigen Planetenstufen 5, 6, 7 sperrt. Hierzu sind in Fig. 5 angedeutete Sperrkugeln 25 vorgesehen, die in den Trägerplatten 24 (Fig. 4) axial verschiebbar gehalten sind. Die Schwenkarme 15 sind mit Sperröffnungen 26 versehen, in die die Kugeln 25 eingreifen können.

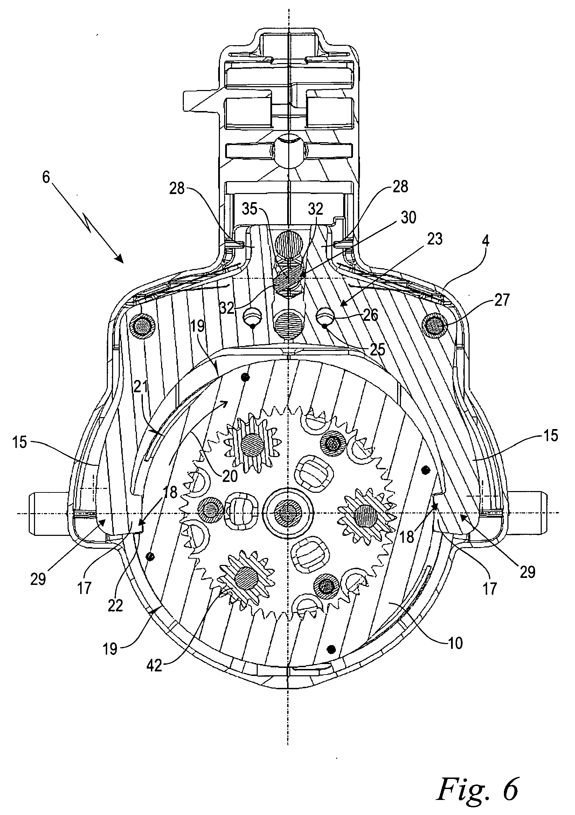

Fig. 6 zeigt die Anordnung nach Fig. 5, bei der die Schwenkarme 15 ausgehend von der freigegebenen Ruhelage nach Fig. 5 in die Blockierlage verschwenkt sind. Gleiche Merkmale sind hier mit gleichen Bezugszeichen versehen. Die Betätigungswelle 35 ist mittels des Hebels 53 (Fig. 3) um ihre Längsachse verschwenkt, so dass die beiden Nocken 32 die beiden ersten Enden 28 der Schwenkarme 25 auseinander drücken. In dessen Folge haben die beiden Schwenkarme 15 ausgehend von der Ruhelage nach Fig. 5 jeweils eine derartige Schwenkbewegung um ihre Schwenkachsen 27 ausgeführt, dass die gegenüberliegenden zweiten Enden 29 mit den Rastvorsprüngen 17 radial nach innen gedrückt sind. Diese Schwenkbewegung ist gegen die Vorspannkraft der Federelemente 33 ausgeführt. Die beiden Rastvorsprünge 17 greifen in die Rastvertiefungen 18 des Hohlrades 10 ein. Dieses kann sich in der Leerlaufdrehrichtung 20 noch so weit drehen, bis die Rastabsätze 22 zur Anlage an den Rastvorsprüngen 17 kommen. Sobald diese Anlage eingetreten ist, ist die Drehbewegung des Hohlrades 10 gegenüber dem Getriebegehäuse 4 in der Leerlaufdrehrichtung 20 blockiert. Es ist dann der schnelle Vorwärtsgang eingelegt, wie er im Zusammenhang mit Fig. 2 weiter oben beschrieben ist.

Sofern der vorstehend beschriebene Schaltvorgang mittels der Schwenkarme 15 bei laufendem Antriebsmotor 1 (Fig. 1, 2) während des Betriebes zu einem Zeitpunkt durchgeführt wird, zu dem die Rastvorsprünge 17 nicht in Überdeckung mit den Rastvertiefungen 18 liegen, werden die Rastvorsprünge 17 zunächst gegen die Umfangskontur 19 oder die Gleitabschnitte 21 des Hohlrades 10 angedrückt, während dieses noch seine Drehung in der Leerlaufdrehrichtung 20 ausführt. Mit fortschreitender Drehung in der Leerlaufdrehrichtung 20 gleiten die Rastvorsprünge 17 auf der Umfangskontur 19 bzw. auf dem Gleitabschnitt 21 unter radialer Anpressung ab. Während des Gleitvorganges entlang der Gleitabschnitte 21 werden die Rastvorsprünge 17 mit zunehmender Vergrößerung des Schwenkwinkels der Schwenkarme 15 um ihre Schwenkachse 27 radial nach innen geführt, bis sie vollständig in die Rastvertiefungen 18 eingreifen und zur Anlage an den Rastabsätzen 22 kommen. In diesem Zustand ist dann das Hohlrad 10 in seiner Drehbewegung blockiert und der zugehörige Gang eingelegt.

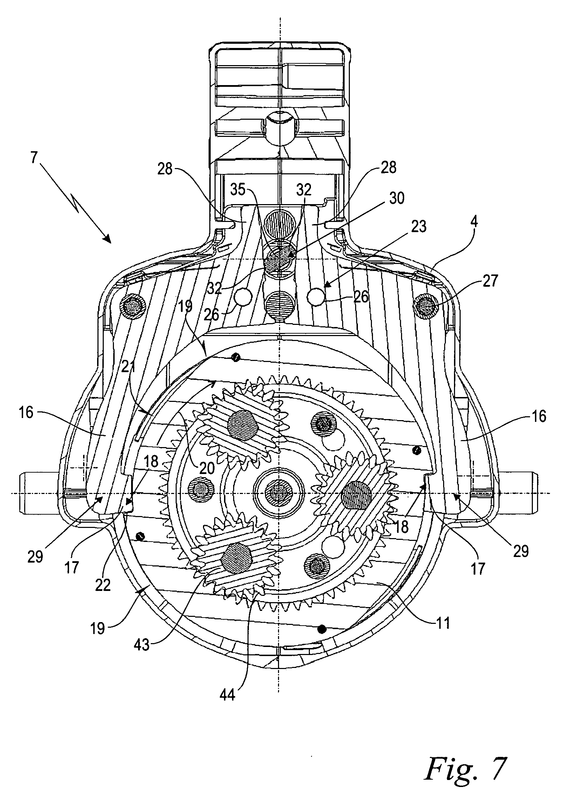

Die Fig. 7 und 8 zeigen jeweils eine Querschnittsdarstellung durch die für den langsamen Vorwärtsgang vorgesehene Planetenstufe 7 bzw. durch die für den Rückwärtsgang vorgesehene Planetenstufe 5. Soweit nicht anders beschrieben, stimmen die Planetenstufen 7, 5 nach den Fig. 7 und 8 in ihren Merkmalen, Eigenschaften und Bezugszeichen untereinander sowie mit denjenigen der Planetenstufe 6 nach den Fig. 5 und 6 überein. Die Planetenstufe 7 nach Fig. 7 weist ein Hohlrad 11, drei Planetenräder 43 sowie zwei sich gegenüberliegende Schwenkarme 16 auf, wobei unter den Planetenrädern 43 auch die im Vergleich dazu größeren Planetenräder 44 der ausgangsseitigen Planetenstufe 8 (Fig. 2) zu erkennen sind. Der Querschnittsdarstellung nach Fig. 8 ist zu entnehmen, dass die eingangsseitige Planetenstufe 5 ein Hohlrad 9, drei Planetenräder 41, das mittige Sonnenrad 40 sowie zwei sich gegenüberliegende Schwenkarme 14 umfasst. Die Schwenkarme 14, 16 sind ebenso wie die Schwenkarme 15 (Fig. 5, 6) mit Sperröffnungen 26 als Teil der Sperreinrichtung 23 versehen.

Nach Fig. 7 sind die Schwenkarme 16 mittels der beiden Nocken 32 der Betätigungswelle 35 in ihre Blockierposition verschwenkt, wobei die Rastvorsprünge 17 in die Rastvertiefungen 18 des Hohlrades 11 eingreifen. Unter gleichzeitigem Bezug auf die Fig. 4 bis 7 ergibt sich, dass die Nocken 32 gemeinsam mit der Betätigungswelle 35 entsprechend dem Pfeil 52 (Fig. 4) in eine der beiden möglichen, durch die Rastnuten 58 (Fig. 4) vorgegebenen axialen Rastpositionen verbracht werden können. Je nach gewählter axialer Rastposition greifen die Nocken 32 entweder an den ersten Enden 28 der Schwenkarme 15 der Planetenstufe 6 (Fig. 5, 6) oder an den ersten Enden 28 der Schwenkarme 16 der dritten Planetenstufe 7 an, nicht jedoch gleichzeitig an beiden. Es können also entweder die Schwenkarme 15 (Fig. 6) in die Rastvertiefungen 18 des Hohlrades 10 oder die Schwenkarme 16 in die Rastvertiefungen 18 des Hohlrades 11 gedrückt werden. Hierdurch können also alternativ nur eines der beiden Hohlräder 10, 11, nicht jedoch beide Hohlräder 10, 11 gleichzeitig in ihrer Drehbewegung relativ zum Getriebegehäuse 4 blockiert werden.

Lediglich die für den Rückwärtsgang vorgesehene erste Planetenstufe 5 (Fig. 8) verfügt über eine eigene Betätigungswelle 34 mit Nocken 32, die bei Bedarf durch Verschwenkung der Betätigungswelle 34 mittels des Hebels 55 (Fig. 3) die zugeordneten Schwenkarme 14 in ihre Blockierposition verschwenken. In einer bevorzugten Alternative wird aber auf diese separate Betätigungswelle 34 verzichtet, so dass nur die oben beschriebene Betätigungswelle 35 zum Einsatz kommt. Die Betätigungswelle 35 wird dann für jede Planetenstufe 5, 6, 7 in eine entsprechende Rastposition verbracht und dort betätigt. Damit sind mit nur einer Betätigungswelle 35 sämtliche Gänge einschließlich des durch die erste Planetenstufe 5 vorgegebenen Rückwärtsganges wählbar. Entsprechend der Darstellung nach Fig. 8 ist zu beachten, dass bei der im Zusammenhang mit Fig. 2 weiter oben beschriebenen Auslegung der ersten Planetenstufe 5 als Rückwärtsgang das zugeordnete Hohlrad 9 eine der in den Fig. 5 bis 7 gezeigten Leerlaufdrehrichtung 20 gegenläufige Leerlaufdrehrichtung 60 aufweist, demnach hier die Gleitabschnitte 21 im Vergleich zu den Planetenstufen 6, 7 (Fig. 5 bis 7) in entgegengesetzter Drehrichtung schräg nach innen verlaufen.

In den Fig. 6 und 8 ist zu erkennen, dass die Schwenkarme 15, 14 in ihrer blockierten Schwenkposition mit ihren Sperröffnungen 26 abweichend von der Darstellung nach Fig. 5 nicht mehr in Überdeckung mit den Sperrkugeln 25 liegen. Die Sperrkugeln 25 greifen hierbei also nicht mehr in die Sperröffnungen 26 ein. Beispielsweise nach Fig. 8 kommen die Sperrkugeln 25 unter der Oberfläche der Schwenkarme 14 zu liegen, in dessen Folge sie eine axiale Auslenkung erfahren. In dieser axialen ausgelenkten Position greifen sie in die Sperröffnungen 26 der weiteren Schwenkarme 15, 16 ein, wie dies beispielhaft in Fig. 5 dargestellt ist. Am Beispiel der Schaltposition nach Fig. 8 wird deutlich, dass die axial ausgelenkten Sperrkugeln 25 infolge ihrer Anlage an den Schwenkarmen 14 nicht zurück ausgelenkt werden können. Vielmehr bleiben sie in den Sperröffnungen 26 der weiteren Schwenkarme 15, 16 liegen, wodurch eine Betätigung der weiteren Schwenkarme 15, 16 bei in Sperrposition verschwenkten Schwenkarmen 14 durch Formschluss zwischen den Sperrkugeln 25 und den Sperröffnungen 26 verhindert ist. Sinngemäß das Gleiche gilt auch für die weiteren Planetenstufen 6, 7 (Fig. 5 bis 7): Bei in Sperrposition verschwenkten Schwenkarmen 15 (Fig. 6) können die Schwenkarme 16, 14 der Planetenstufen 7, 5 (Fig. 7, 8) nicht betätigt werden, während bei in blockierter Position verschwenkten Schwenkarmen 16 der Planetenstufe 7 (Fig. 7) die Schwenkarme 15, 14 der Planetenstufen 6, 5 (Fig. 5, 6, 8) nicht mehr betätigt werden können. Es kann also nur jeweils eine Stufe 5, 6, 7 einzeln betätigt bzw. ausgewählt werden.

Zum Lösen des jeweils blockierten Hohlrades 9, 10, 11 werden die Betätigungswellen 34, 35 mit den Nocken 31, 32 zurückgeschwenkt, wie dies beispielhaft in Fig. 5 für die Planetenstufe 6 dargestellt ist. Die Vorspannkraft der Federelemente 33 verschwenkt die Schwenkarme 14, 15, 16 aus ihrer Blockierposition heraus, so dass die Rastvorsprünge 17 nicht mehr in die Rastvertiefungen 18 eingreifen. Die Hohlräder 9, 10, 11 können sich wieder frei in ihrer Leerlaufdrehrichtung 20, 60 drehen. Insgesamt ist dadurch sichergestellt, dass sowohl nur ein einzelnes ausgewähltes Hohlrad 9, 10, 11 in seiner Drehung blockiert werden kann, als auch dass die jeweils weiteren verbleibenden Hohlräder 9, 10, 11 sich ungestört in ihrer Leerlaufdrehrichtung 20, 60 frei drehen können, so dass die im Zusammenhang mit Fig. 2 weiter oben beschriebene Untersetzung des Planetengetriebes 3 eintritt.

Die erfindungsgemäße Ausgestaltung des Planetengetriebes 3 ist hier insgesamt am Beispiel mit zwei Vorwärtsgängen und einem Rückwärtsgang dargestellt. Natürlich kann auch eine Ausgestaltung mit abweichender Gangzahl zweckmäßig sein.

## Patentansprüche

1. Gartengerät zur Bodenbearbeitung, umfassend einen Antriebsmotor (1) und mindestens ein vom Antriebsmotor (1) drehend angetriebenes Werkzeug (2), wobei zwischen dem Antriebsmotor (1) und dem Werkzeug (2) ein Getriebe angeordnet ist, wobei das Getriebe ein mehrgängiges, schaltbares Planetengetriebe (3) mit einem Getriebegehäuse (4) und mit mindestens zwei Planetenstufen (5, 6, 7, 8) ist, wobei die Planetenstufen (5, 6, 7, 8) jeweils ein Hohlrad (9, 10, 11, 12) aufweisen, und wobei mindestens zwei Hohlrädern (9, 10, 11) jeweils mindestens ein Feststellelement (13) zum wahlweisen Freigeben und drehfesten Festlegen des jeweiligen Hohlrades (9, 10, 11) gegenüber dem Getriebegehäuse (4) zugeordnet ist,
**dadurch gekennzeichnet, dass** ein formschlüssiger Eingriff des Feststellelementes (13) in das zugeordnete Hohlrad (9, 10, 11) vorgesehen ist, dass das Feststellelement (13) als schwenkbarer, starrer Schwenkarm (14, 15, 16) mit mindestens einem hervorstehenden Rastvorsprung (17) ausgebildet ist, dass am Umfang des zugeordneten Hohlrades (9, 10, 11) mindestens eine, bevorzugt zwei Rastvertiefungen (18) zur Aufnahme des Rastvorsprunges (17) angeordnet sind, und dass das Hohlrad (9, 10, 11) eine kreisförmige Umfangskontur (19) und eine Leerlaufdrehrichtung (20, 60) aufweist, wobei die Rastvertiefung (18) ausgehend von der Umfangskontur (19) einen entgegen der Leerlaufdrehrichtung (20, 60) schräg nach innen verlaufenden Gleitabschnitt (21) umfasst, der an einem in radialer Richtung sich erstreckenden Rastabsatz (22) endet.

2. Gartengerät nach Anspruch 1,
**dadurch gekennzeichnet, dass** am Umfang des zugeordneten Hohlrades (9, 10, 11) zwei Rastvertiefungen (18) zur Aufnahme des Rastvorsprunges (17) angeordnet sind.

3. Gartengerät nach Anspruch 2,
**dadurch gekennzeichnet, dass** zwei sich gegenüberliegende Schwenkarme (14, 15, 16) insbesondere unter Bildung einer Zange für je ein zugeordnetes Hohlrad (9, 10, 11) vorgesehen sind.

4. Gartengerät nach einem der Ansprüche 1 bis 3,
**dadurch gekennzeichnet, dass** eine Sperreinrichtung (23) für die Schwenkarme (14, 15, 16) vorgesehen ist, die bei betätigtem Schwenkarm (14, 15, 16) einer Planetenstufe (5, 6, 7) die Betätigung des Schwenkarmes (14, 15, 16) einer anderen Planetenstufe (5, 6, 7) sperrt.

5. Gartengerät nach Anspruch 4,
**dadurch gekennzeichnet, dass** Trägerplatten (24) zwischen den Schwenkarmen (14, 15, 16) angeordnet sind, wobei die Sperreinrichtung (23) Sperrkugeln (25) sowie Sperröffnungen (26) umfasst, wobei die Sperrkugeln (25) axial verschiebbar in den Trägerplatten (24) gehalten sind, und wobei die Sperröffnungen (26) in den Schwenkarmen (14, 15, 16) zur Aufnahme der Sperrkugeln (25) vorgesehen sind.

6. Gartengerät nach einem der Ansprüche 1 bis 5,
**dadurch gekennzeichnet, dass** die Schwenkarme (14, 15, 16) um eine Schwenkachse (27) gelenkig gelagert sind, wobei an einem ersten Ende (28) der Schwenkarme (14, 15, 16) jeweils eine Betätigungseinrichtung (30) zur voneinander unabhängigen Verschwenkung der Schwenkarme (14, 15, 16) angreift.

7. Gartengerät nach Anspruch 6,
**dadurch gekennzeichnet, dass** die Schwenkachse (27) zwischen dem der Betätigungseinrichtung (30) zugeordneten ersten Ende (28) und einem weiteren Ende (29) der Schwenkarme (14, 15, 16) liegt, wobei an dem weiteren Ende (29) jeweils der Rastvorsprung (17) angeordnet ist, und wobei die Betätigungseinrichtung (30) mindestens einen schwenkbaren Nocken (31, 32) zum Andrücken gegen die ersten Enden (28) sowie Federelemente (33) zum Rückstellen der durch den Nocken (31, 32) ausgelenkten Schwenkarme (14, 15, 16) aufweist.

8. Gartengerät nach Anspruch 7,
**dadurch gekennzeichnet, dass** die Betätigungseinrichtung (30) eine schwenkbare und axial verschiebbare Betätigungswelle (35) mit dem mindestens einen Nocken (32) aufweist, wobei verschiedene axiale Schaltpositionen der Betätigungswelle (35) vorgesehen sind, in denen der mindestens eine Nocken (32) wahlweise mit dem Schwenkarm (15, 16) nur einer Planetenstufe (6, 7) im Eingriff steht.

9. Gartengerät nach einem der Ansprüche 1 bis 8,
**dadurch gekennzeichnet, dass** auf der Abtriebsseite des Planetengetriebes (3) ein Abtriebsstrang (63) vorgesehen ist, und dass der Abtriebsstrang (63) mit einer insbesondere rastenden Bremseinrichtung (62) versehen ist.

10. Gartengerät nach einem der Ansprüche 1 bis 9,
**dadurch gekennzeichnet, dass** die Planetenstufen (5, 6, 7, 8) derart ausgelegt sind, dass ein Rückwärtsgang und mindestens ein, insbesondere zwei unterschiedliche Vorwärtsgänge vorgesehen sind.

## Claims

1. Gardening tool for tillage, comprising a drive motor (1) and at least one tool (2) driven to rotate by the drive motor (1), wherein a gearbox is located between the drive motor (1) and the tool (2), the gearbox being a multi-speed manual planetary gear set (3) with a gear case (4) and at least two planetary stages (5, 6, 7, 8), wherein each of the planetary stages (5, 6, 7, 8) comprises an internal gear (9, 10, 11, 12) and wherein at least one locking element (13) each is assigned to at least two internal gears (9, 10, 11) for optionally releasing and non-rotatably locking the respective internal gear (9, 10, 11) relative to the gear case (4),
**characterised in that** a positive engagement of the locking element (13) with the associated internal gear (9, 10, 11) is provided, **in that** the locking element (13) is designed as a pivotable rigid swivelling arm (14, 15, 16) with at least one protruding latching projection (17), **in that** at least one latching recess (18) and preferably two latching recesses (18) for the accommodation of the latching projection (17) is/are provided on the circumference of the associated internal gear (9, 10, 11), and **in that** the internal gear (9, 10, 11) has a circular circumferential contour (19) and an idling direction of rotation (20, 60), wherein the latching recess (18) comprises a sliding section (21), which extends inwards at an angle from the circumferential contour (19) against the idling direction of rotation (20, 60) and which terminates at a latching shoulder (22) extending in the radial direction.

2. Gardening tool according to claim 1,
**characterised in that** two latching recesses (18) for the accommodation of the latching projection (17) are provided on the circumference of the associated internal gear (9, 10, 11).

3. Gardening tool according to claim 2,
**characterised in that** two swivelling arms (14, 15, 16) are provided opposite each other, in particular forming a gripping device for an associated internal gear (9, 10, 11) each.

4. Gardening tool according to any of claims 1 to 3,
**characterised in that** a locking device (23) for the swivelling arms (14, 15, 16), which, if the swivelling arm (14, 15, 16) of one planetary stage (5, 6, 7) is actuated, blocks the actuation of the swivelling arm (14, 15, 16) of another planetary stage (5, 6, 7), is provided.

5. Gardening tool according to claim 4,
**characterised in that** support plates (24) are arranged between the swivelling arms (14, 15, 16), wherein the locking device (23) comprises locking balls (25) and locking openings (26), wherein the locking balls (25) are held in the support plates (24) in an axially displaceable manner and wherein the locking openings (26) in the swivelling arms (14, 15, 16) are provided for the accommodation of the locking balls (25).

6. Gardening tool according to any of claims 1 to 5,
**characterised in that** the swivelling arms (14, 15, 16) are hinge-mounted about a pivot axis (27), with an actuating device (30) acting on a first end (28) of each of the swivelling arms (14, 15, 16) for the independent pivoting of the swivelling arms (14, 15, 16).

7. Gardening tool according to claim 6,
**characterised in that** the pivot axis (27) lies between the first end (28) assigned to the actuating device (30) and a further end (29) of the swivelling arms (14, 15, 16), the latching projection (17) being in each case located at the further end (29) and the actuating device (30) comprising at least one pivotable cam (31, 32) for pressing against the first ends (28) and spring elements (33) for resetting the swivelling arms (14, 15, 16) displaced by the cam (31, 32).

8. Gardening tool according to claim 7,
**characterised in that** the actuating device (30) comprises a pivotable and axially displaceable actuating shaft (35) with the at least one cam (32), wherein various axial switching positions of the actuating shaft (35) are provided, in which the at least one cam (32) is optionally in engagement with the swivelling arm (15, 16) of only one planetary stage (6, 7).

9. Gardening tool according to any of claims 1 to 8,
**characterised in that** a drive train (63) is provided on the output side of the planetary gear set (3), and **in that** the drive train (63) is provided with an in particular latching braking device (62).

10. Gardening tool according to any of claims 1 to 9,
**characterised in that** the planetary stages (5, 6, 7, 8) are configured such that a reverse gear and at least one forward gear, in particular two different forward gears, are provided.

## Revendications

1. Appareil de jardinage pour travailler la terre, comprenant un moteur d'entraînement (1) et au moins un outil (2) entraîné en rotation par le moteur d'entraînement (1), étant précisé qu'un engrenage est disposé entre le moteur d'entraînement (1) et l'outil (2), que l'engrenage est un engrenage planétaire mécanique à plusieurs vitesses (3) avec un carter d'engrenage (4) et au moins deux étages planétaires (5, 6, 7, 8), que les étages planétaires (5, 6, 7, 8) comportent chacun une couronne (9, 10, 11, 12), et qu'à au moins deux couronnes (9, 10, 11) est associé au moins un élément d'arrêt (13) respectif pour débloquer ou bloquer en rotation, sélectivement, la couronne (9, 10, 11) par rapport au carter d'engrenage (4),
**caractérisé en ce qu'**il est prévu un engrènement par complémentarité de forme de l'élément d'arrêt (13) dans la couronne (9, 10, 11) associée, **en ce que** l'élément d'arrêt (13) est conçu comme un bras pivotant rigide (14, 15, 16) avec au moins une saillie de verrouillage (17) qui dépasse, **en ce qu'**il est prévu, sur la circonférence de la couronne (9, 10, 11) associée, au moins un et de préférence deux creux de verrouillage (18) pour recevoir la saillie de verrouillage (17), et **en ce que** la couronne (9, 10, 11) présente un contour circonférentiel circulaire (19) et un sens de rotation à vide (20, 60), étant précisé que le creux de verrouillage (18) comprend, à partir du contour circonférentiel (19), un segment de glissement (21) qui s'étend en biais vers l'intérieur en sens inverse par rapport au sens de rotation à vide (20, 60) et qui se termine au niveau d'un décrochement de verrouillage (22) qui s'étend dans le sens radial.

2. Appareil de jardinage selon la revendication 1,
**caractérisé en ce que** deux creux de verrouillage (18) pour recevoir la saillie de verrouillage (17) sont disposés sur la circonférence de la couronne (9, 10, 11) associée.

3. Appareil de jardinage selon la revendication 2,
**caractérisé en ce qu'**il est prévu deux bras pivotants opposés (14, 15, 16), qui forment en particulier une pince pour une couronne (9, 10, 11) associée.

4. Appareil de jardinage selon l'une des revendications 1 à 3,
**caractérisé en ce qu'**il est prévu un dispositif de blocage (23) pour les bras pivotants (14, 15, 16), qui, quand le bras pivotant (14, 15, 16) d'un étage planétaire (5, 6, 7) est actionné, bloque l'actionnement du bras pivotant (14, 15, 16) d'un autre étage planétaire (5, 6, 7).

5. Appareil de jardinage selon la revendication 4,
**caractérisé en ce que** des plaques de support (24) sont disposées entre les bras pivotants (14, 15, 16), étant précisé que le dispositif de blocage (23) comprend des billes de blocage (25) ainsi que des ouvertures de blocage (26), que les billes de blocage (25) sont contenues, mobiles axialement, dans les plaques de support (24), et que les ouvertures de blocage (26) sont prévues dans les bras pivotants (14, 15, 16) pour recevoir les billes de blocage (25).

6. Appareil de jardinage selon l'une des revendications 1 à 5,
**caractérisé en ce que** les bras pivotants (14, 15, 16) sont montés de manière articulée sur un axe de pivotement (27), étant précisé que sur une première extrémité (28) de chaque bras pivotant (14, 15, 16), un dispositif d'actionnement (30) agit pour faire pivoter les bras pivotants (14, 15, 16) indépendamment les uns des autres.

7. Appareil de jardinage selon la revendication 6,
**caractérisé en ce que** l'axe de pivotement (27) se trouve entre la première extrémité (28) associée au dispositif d'actionnement (30) et une autre extrémité (29) des bras pivotants (14, 15, 16), étant précisé que sur chaque autre extrémité (29) est disposée la saillie de verrouillage (17), et que le dispositif d'actionnement (30) comporte au moins une came pivotante (31, 32) pour appuyer contre les premières extrémités (28), ainsi que des éléments à ressort (33) pour ramener les bras pivotants (14, 15, 16) déviés par la came (31, 32).

8. Appareil de jardinage selon la revendication 7,
**caractérisé en ce que** le dispositif d'actionnement (30) comporte un arbre d'actionnement (35) pivotant et mobile axialement, avec la ou les cames (32), étant précisé qu'il est prévu différentes positions de manoeuvre axiales de l'arbre d'actionnement (35), dans lesquelles la ou les cames (32) s'engrènent sélectivement avec le bras pivotant (15, 16) d'un seul étage planétaire (6, 7).

9. Appareil de jardinage selon l'une des revendications 1 à 8,
**caractérisé en ce qu'**un groupe de sortie (63) est prévu du côté sortie de l'engrenage planétaire (3), et **en ce que** le groupe de sortie (63) est pourvu d'un dispositif de freinage (62) en particulier à verrouillage.

10. Appareil de jardinage selon l'une des revendications 1 à 9,
**caractérisé en ce que** les étages planétaires (5, 6, 7, 8) sont conçus de telle sorte qu'une marche arrière et au moins une, en particulier deux vitesses avant différentes soient prévues.
